# EUROPEAN PATENT APPLICATION

(11) **EP 4 632 790 A1**
(43) Date of publication of application: **15.10.2025**
(21) Application number: 22967912.1
(22) Date of filing: 09.12.2022
(51) Int. Cl.: H01L 21/00

(54) **ESTIMATED VALUE DISPLAY DEVICE, METHOD, AND PROGRAM**

(71) Applicant: Resonac Corporation, Tokyo 105-7325 (JP)
(72) Inventor: ABE, Keita, Tokyo 100-6606 (JP); NAKATA, Mitsuki, Tokyo 100-6606 (JP)
(74) Representative: Hoffmann Eitle
(86) International application number: PCT/JP2022/045568
(87) International publication number: WO 2024/122070

(57) **Abstract**

A reception unit (34) receives, in regard to one or more materials selected from a plurality of materials preregistered as candidates for materials to be used in a product, a range of values for one or more parameters affecting a phenomenon occurring in the product; a calculation unit (36) inputs, as explanatory variables, a plurality of values included in the received range to a statistical model created based on results obtained by a simulation or an experiment on a value representing the phenomenon occurring in the product in a case in which values of each of a plurality of parameters affecting the phenomenon occurring in the product have been changed, the statistical model using a portion of the plurality of parameters as explanatory variables and using the results as response variables, and that calculates estimates for the value representing the phenomenon occurring in the product which correspond to each of the plurality of values; and a display control unit (38) performs control to display, at a display device an image in which the calculated estimates are correlated with each of the plurality of values.

## Description

### TECHNICAL FIELD

The present disclosure relates to an estimate display device, an estimate display method, and an estimate display program.

### BACKGROUND ART

Conventionally, when, for example, selecting materials to use to manufacture a product, phenomena that will occur in the product depending on the design of the product and the physical properties of the materials that are used have been checked by simulation.

For example, a method of selecting materials for a panel used to manufacture a semiconductor package has been proposed, which selects materials that can be used to manufacture a panel with a sufficiently small amount of warping (see Patent Document 1). The method described in Patent Document 1 relates to a method of selecting materials for a panel that includes a back coating layer, numerous semiconductor devices, a sealing layer, and an insulating layer. The method uses structural analysis software to construct a virtual model of the panel to which the properties of the materials configuring the back coating layer, the sealing layer, and the insulating layer are input. Furthermore, the method calculates the amount of warping in the virtual model and grasps, by structural analysis, the properties of the materials that will have an effect on the amount of warping of the panel among the materials configuring the back coating layer, the sealing layer, and the insulating layer. Then, the method newly selects, based on the information that has been grasped, at least one of the materials configuring the back coating layer, the sealing layer, and the insulating layer so that the amount of warping in the virtual model is reduced.

### CITATION LIST

### Patent Literature

Patent Literature 1: JP-A No. 2020-38924

### SUMMARY OF INVENTION

### Technical Problem

Since phenomena that will occur in a product are affected by various parameters relating to the product, simulations of the phenomena are performed by setting values for each parameter. When the product is a package substrate, the parameters include, for example, the thickness of the substrate, the size of the substrate, the size of chips mounted on the substrate, the types of materials used, and the number of build-up layers.

When checking a phenomenon that will occur in a product, it is more common to check trends in the phenomenon in regard to a plurality of patterns in which a plurality of different values are set for each parameter than to check a single pattern in which specific values are set for each parameter. In this case, since there are many types of parameters, a simulation becomes performed in regard to each of the massive number of patterns due to an explosion in combinations of values for each parameter. For that reason, it takes time to present the results of the simulations for checking trends. For example, when evaluating trends in phenomena in conversations with customers, the simulation results cannot be provided to the customers in a timely manner.

The present disclosure has been made in view of the above points, and it is an object thereof to provide an estimate display device, method, and program that can, by shortening calculation time, display in a timely manner trends in a phenomenon occurring in a product with respect to changes in values of parameters.

### Solution to Problem

In order to achieve the above object, an estimate display device pertaining to the present disclosure is configured to include: a reception unit that receives, in regard to one or more materials selected from a plurality of materials preregistered as candidates for materials to be used in a product, a range of values for one or more parameters affecting a phenomenon occurring in the product; a calculation unit that inputs, as explanatory variables, a plurality of values included in the range received by the reception unit to a statistical model created based on results obtained by a simulation or an experiment on a value representing the phenomenon occurring in the product in a case in which values of each of a plurality of parameters affecting the phenomenon occurring in the product have been changed, the statistical model using a portion of the plurality of parameters as explanatory variables and using the results as response variables, and that calculates estimates for the value representing the phenomenon occurring in the product which correspond to each of the plurality of values; and a display control unit that performs control to display, at a display device an image in which the estimates calculated by the calculation unit are correlated with each of the plurality of values. Because of this, trends in the phenomenon occurring in the product with respect to changes in the values of the parameters can be displayed in a timely manner by shortening calculation time.

Furthermore, the one or more parameters may be parameters selected from the plurality of parameters as explanatory variables in the statistical model. Because of this, a simple statistical model can be generated, and calculation time for calculating the estimates for the phenomenon can be shortened even when a plurality of values for the parameters are set in order to check trends in the phenomenon.

Furthermore, the reception unit may display a reception screen including designation areas for receiving the range of values in regard to each of the one or more parameters, and receives the range of values. Furthermore, the reception unit may display the reception screen, which further includes a selection area for selecting the one or more materials from the preregistered plurality of materials. Because of this, the user can check images representing trends in the phenomenon by simply inputting the minimum necessary information to the reception screen.

Furthermore, the reception unit may receive a range of values regarding each of a first parameter and a second parameter, the calculation unit may calculate, for each of the plurality of values regarding the second parameter, the estimates corresponding to each of the plurality of values regarding the first parameter, and the display control unit may create and display, for each of the plurality of values regarding the second parameter, an image in which the estimates are correlated with each of the plurality of values regarding the first parameter. Because of this, trends in the phenomenon with respect to the first parameter and trends in the phenomenon with respect to the second parameter can be combined and checked.

Furthermore, the reception unit may display a reception screen including a display component for designating any of the plurality of values regarding the second parameter and receive the value of the second parameter that has been designated as a result of the display component being operated, and the display control unit may switch between and display, in accordance with the value of the second parameter received by the reception unit, a plurality of images created for each of the plurality of values regarding the second parameter. Because of this, it becomes easy to check trends in the phenomenon with respect to the second parameter.

Furthermore, the estimate display device pertaining to the disclosure may be configured to include a creation unit that creates, based on results obtained by a simulation or an experiment on a value representing the phenomenon occurring in the product, the statistical model using a portion of the plurality of parameters as explanatory variables and using the results as response variables.

Furthermore, in a case in which the product is a semiconductor package, the phenomenon may be warping of the product, stress of the product, or the lifespan of solder in the product.

Furthermore, an estimate display method pertaining to the disclosure is a method,comprising: a reception unit receiving, in regard to one or more materials selected from a plurality of materials preregistered as candidates for materials to be used in a product, a range of values for one or more parameters affecting a phenomenon occurring in the product; a calculation unit inputting, as explanatory variables, a plurality of values included in the range received by the reception unit to a statistical model, created based on results obtained by a simulation or an experiment on a value representing the phenomenon occurring in the product in a case in which values of each of a plurality of parameters affecting the phenomenon occurring in the product have been changed, the statistical model using a portion of the plurality of parameters as explanatory variables and using the results as response variables, and calculating estimates for the value representing the phenomenon occurring in the product which correspond to each of the plurality of values; and a display control unit performing control to display, at a display device an image in which the estimates calculated by the calculation unit are correlated with each of the plurality of values.

Furthermore, an estimate display program pertaining to the disclosure is a program executable by a computer to function as: a reception unit that receives, in regard to one or more materials selected from a plurality of materials preregistered as candidates for materials to be used in a product, a range of values for one or more parameters affecting a phenomenon occurring in the product; a calculation unit that inputs, as explanatory variables, a plurality of values included in the range received by the reception unit to a statistical model created based on results obtained by a simulation or an experiment on a value representing the phenomenon occurring in the product in a case in which values of each of a plurality of parameters affecting the phenomenon occurring in the product have been changed, the statistical model using a portion of the plurality of parameters as explanatory variables and using the results as response variables, and that calculates estimates for the value representing the phenomenon occurring in the product which correspond to each of the plurality of values; and a display control unit that performs control to display, at a display device an image in which the estimates calculated by the calculation unit are correlated with each of the plurality of values.

### BRIEF DESCRIPTION OF DRAWINGS

FIG. 1 is a block diagram showing hardware configurations of an estimate display device pertaining to an embodiment.
FIG. 2 is a block diagram showing an example of functional configurations of the estimate display device pertaining to the embodiment.
FIG. 3 is a diagram showing an example of simulation results.
FIG. 4 is a diagram for describing the creation of a statistical model.
FIG. 5 is a diagram showing an example of a reception display screen.
FIG. 6 is a diagram showing an example of a material DB.
FIG. 7 is a diagram showing an example of the reception display screen.
FIG. 8 is a diagram for describing switching between displays of graphs.
FIG. 9 is a flowchart showing the flow of a creation process.
FIG. 10 is a flowchart showing the flow of a display process.
FIG. 11 is a diagram showing an example of a display of a graph in example modification 3.
FIG. 12 is a block diagram showing the schematic configuration of an estimate display system pertaining to a fifth example modification.

### DESCRIPTION OF EMBODIMENTS

An example of an embodiment will be described below with reference to the drawings.

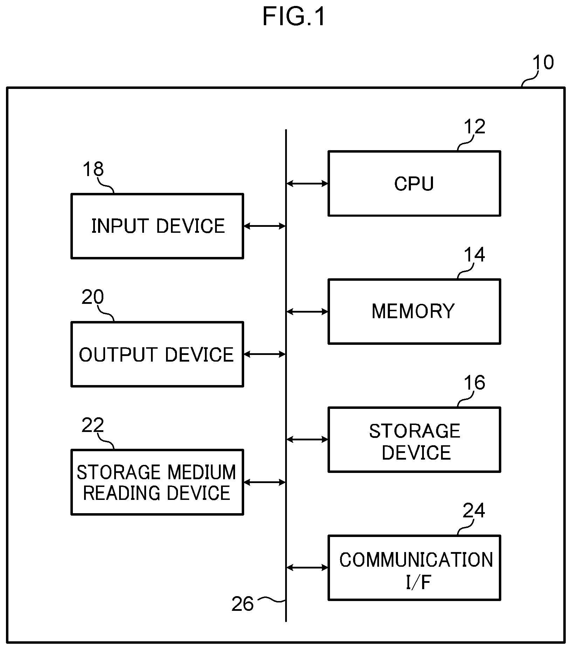

FIG. 1 is a block diagram showing hardware configurations of an estimate display device 10 pertaining to the embodiment. As shown in FIG. 1, the estimate display device 10 has a central processing unit (CPU) 12, a memory 14, a storage device 16, an input device 18, an output device 20, a storage medium reading device 22, and a communication interface (I/F) 24. These configurations are communicably connected to each other via a bus 26.

The storage device 16 stores an estimate display program for executing a creation process and a display process described below. The CPU 12 is a central arithmetic processing unit, executes various types of programs, and controls each of the configurations. That is, the CPU 12 reads programs from the storage device 16 and executes the programs using the memory 14 as a workspace. The CPU 12 controls each of the above configurations and performs various types of arithmetic processes in accordance with the programs stored in the storage device 16.

The memory 14 is configured by a random-access memory (RAM) and temporarily stores programs and data as a workspace. The storage device 16 is configured by a read-only memory (ROM), a hard disk drive (HDD), or a solid-state drive (SSD), for example, and stores various types of programs, including an operating system, and various types of data.

The input device 18 is a device for carrying out various types of input, such as a keyboard and a mouse for example. The output device 20 is a device for outputting various types of information, such as a display and a printer for example. By employing a touch panel display as the output device 20, the touch panel display may also be made to function as the input device 18.

The storage medium reading device 22 reads data stored in various types of storage media, such as compact disc (CD)-ROMs, digital versatile disc (DVD)-ROMs, Blu-ray discs, and universal serial bus (USB) memories, and writes data to the storage media. The communication I/F 24 is an interface for communicating with other devices and uses a standard such as Ethernet (registered trademark), FDDI, or Wi-Fi (registered trademark).

Next, functional configurations of the estimate display device 10 pertaining to the embodiment will be described. In the following embodiment, a case where the target product is a semiconductor package and trends in the warping of the semiconductor package substrate are estimated and displayed as the phenomenon occurring in the product will be taken as an example and described.

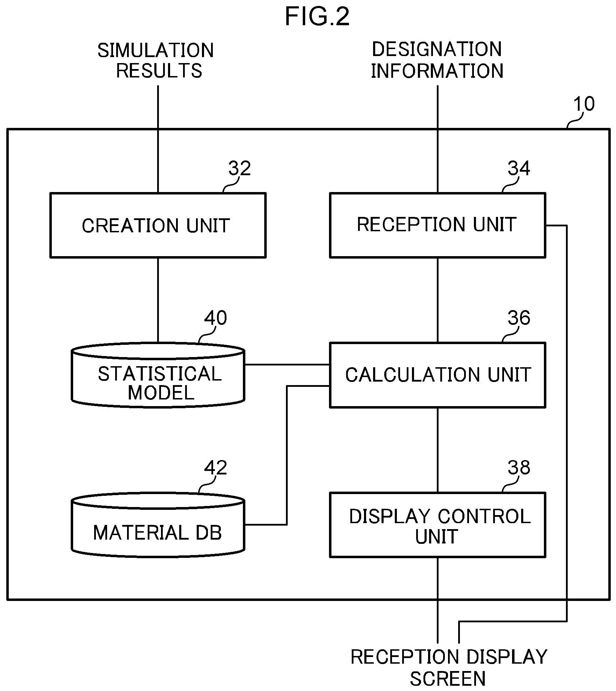

FIG. 2 is a block diagram showing an example of the functional configurations of the estimate display device 10. As shown in FIG. 2, the estimate display device 10 includes, as functional configurations, a creation unit 32, a reception unit 34, a calculation unit 36, and a display control unit 38. Furthermore, a statistical model 40 and a material database (DB) 42 are stored in predetermined storage areas in the estimate display device 10. Each of these functional configurations is realized by the CPU 12 reading, loading to the memory 14, and executing the estimate display program stored in the storage device 16.

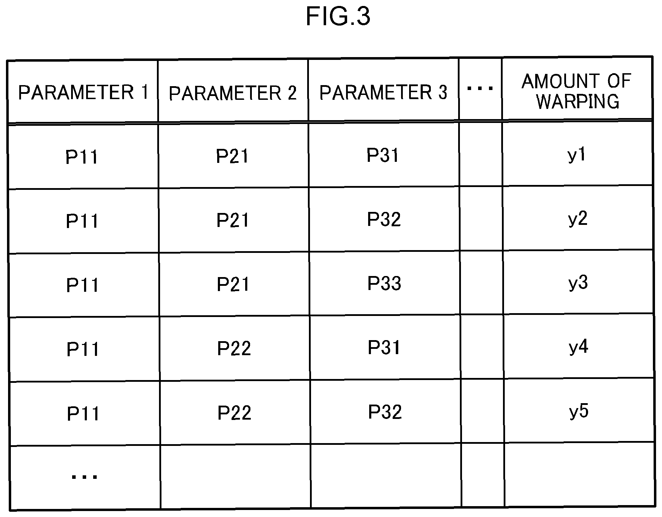

The creation unit 32 acquires results in which the warping of the semiconductor package substrate is simulated using simulation software. FIG. 3 shows an example of the simulation results. The simulation results include values for different parameters, which are set by each pattern of a plurality of patterns in which a plurality of different values are set as values for different parameters affecting the warping of the semiconductor package substrate, and amounts of warping that have been simulated in regard to those patterns. Parameter 1, parameter 2, parameter 3, etc. in FIG. 3 are the thickness of the substrate, the size of the substrate, the size of chips mounted on the substrate, the type of material used, the number of build-up layers, the Young's modulus of the material, and the coefficient of thermal expansion.

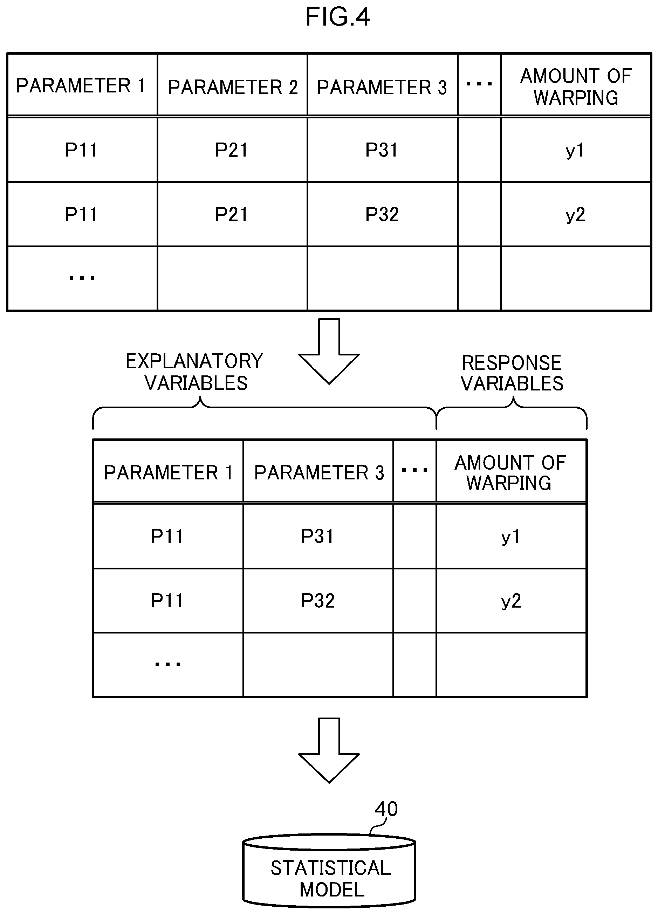

The creation unit 32 selects, from the parameters included in the acquired simulation results, parameters to serve as explanatory variables in the statistical model 40 that it will create. For example, the creation unit 32 selects parameters designated by a user. As shown in FIG. 4, the creation unit 32 creates the statistical model 40 using the selected parameters included in the simulation results as explanatory variables and the amounts of warping included in the simulation results as response variables.

Specifically, the creation unit 32 creates as the statistical model 40 a function f in which y = f(x1, x2, ...), where x₁, x₂, ... denotes the values of the parameters selected as the explanatory variables and y denotes the amounts of warping. The statistical model 40 may be a machine learning model using multiple regression analysis or a deep neural network for example. More specifically, the creation unit 32 repeatedly updates the weight of the statistical model 40 until a termination condition is satisfied so as to minimize the error between the estimates calculated by inputting x₁, x₂, ... to the statistical model 40 and the amounts of warping y included in the simulation results. The termination condition may, for example, be when the number of updates to the weight reaches a predetermined number, when the error becomes equal to or less than a predetermined value, or when the error converges. The creation unit 32 stores the statistical model 40 it has created in a predetermined storage area in the estimate display device 10.

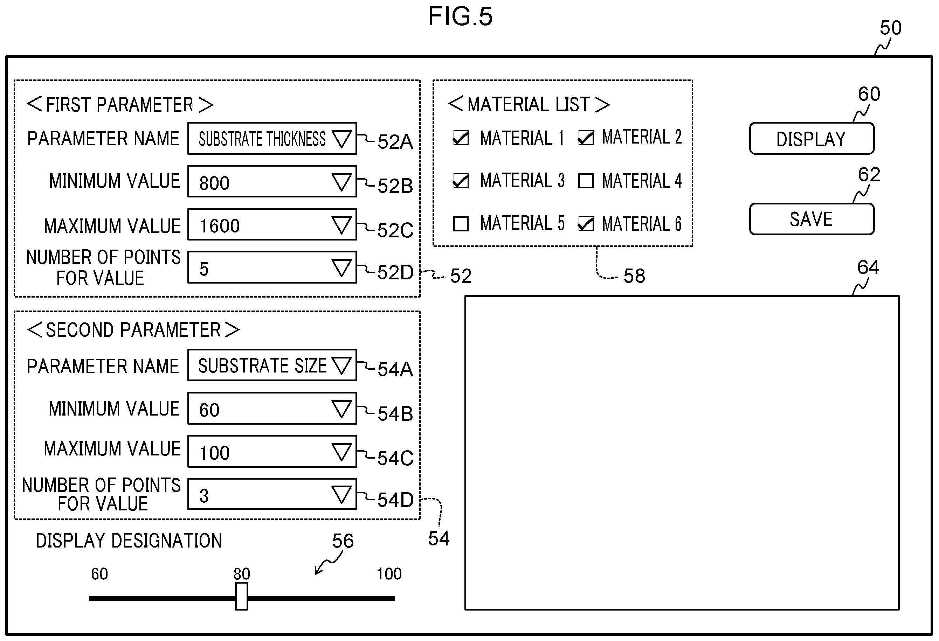

The reception unit 34 receives designation information for checking trends in the warping of the semiconductor package substrate. Specifically, the reception unit 34 displays on a display a reception display screen 50 such as shown in FIG. 5 and receives the designation information. The reception display screen 50 in the example of FIG. 5 includes a first designation area 52, a second designation area 54, a slide bar 56, a material selection area 58, a display button 60, a save button 62, and a display area 64.

As described below, in this embodiment, trends in the amount of warping are displayed as a graph in which the values of the first parameter that has been designated are assigned to the X-axis and the amounts of warping are assigned to the Y-axis. Furthermore, in this embodiment, a plurality of graphs showing trends in the amount of warping are created for each of the values of the second parameter that has been designated. The first designation area 52 is an area for designating the first parameter, and the second designation area 54 is an area for designating the second parameter.

The first designation area 52 includes an input field 52A for inputting a parameter name, an input field 52B for inputting a minimum value of a range of values for the parameter, and an input field 52C for inputting a maximum value of the range. Furthermore, the first designation area 52 includes an input field 52D for inputting the number of points at which values are to be taken within the designated range. The second designation area 54 also similarly includes an input field 54A, an input field 54B, an input field 54C, and an input field 54D. Each of the input fields may also, for example, be a text box for directly inputting designation content or a pull-down menu for selecting designation content from predetermined options. It will be noted that the number of points at which values are to be taken within the designated range is not limited to being designated by the user on the reception display screen 50. For example, the estimate display device may be configured to take a predetermined number of points. In this case, the input field 52D and the input field 54D may be omitted.

The slide bar 56 is a display component for designating the value of the second parameter corresponding to any of the points in the designated range. For example, let us assume that the size of the substrate is designated as the second parameter, a minimum value of 60 mm and a maximum value of 100 mm are designated as the value range, and values at three points within the range are designated to be taken. In this case, as shown in FIG. 5, the reception unit 34 sets 60, 80, and 100 as scale marks on the slide bar 56. The value of the second parameter is designated by aligning the marker of the slide bar 56 with any of the scale marks.

The material selection area 58 is an area for selecting materials that the user wants to check for trends in the amount of warping of the substrate from among materials preregistered in the material DB 42. In the example of FIG. 5, material names of the preregistered materials are displayed in a list, and checkboxes are provided in correspondence to each of the material names. When a checkbox is checked, the material corresponding to that checkbox is selected. One or more of the materials may be selected.

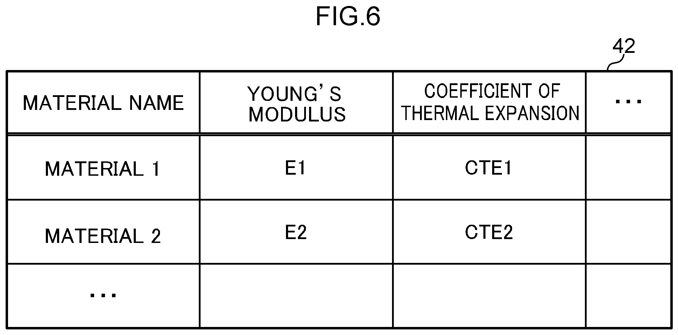

Here, FIG. 6 shows an example of the material DB 42. In the example of FIG. 6, for each material, the "material name" of that material is correlated and stored with physical property values such as "Young's modulus" and "coefficient of thermal expansion" in the material DB 42. It will be noted that instead of the material names or in addition to the material names, product model names and numbers of the materials or unique identification numbers may be used.

The display button 60 is a button that is selected when displaying the aforementioned graphs based on the designation information that was designated in the first designation area 52, the second designation area 54, the slide bar 56, and the material selection area 58. The save button 62 is a button that is selected when saving, in a predetermined storage area, data relating to at least one of estimates of amounts of warping calculated by the calculation unit 36 described below and an image of the graph generated by the display control unit 38 described below. The save button 62 may be configured so that, when saving the data, the user can select whether to save the estimate data, the image of the graph, or both. Furthermore, a button for outputting the data relating to the estimates of the amounts of warping in a csv (Comma Separated Values) file or the like may be provided. The display area 64 is an area where the graphs based on the designation information that was designated in the first designation area 52, the second designation area 54, the slide bar 56, and the material selection area 58 are displayed.

The calculation unit 36 inputs, as explanatory variables to the statistical model 40 created by the creation unit 32, a plurality of values regarding each of the first parameter and second parameter included in the designation information received by the reception unit 34 when the display button 60 is selected on the reception display screen 50. For example, let us assume that the thickness of the substrate is designated as the first parameter, a minimum value of 800 µm and a maximum value of 1600 µm are designated as the value range, and values at five points within the range are designated to be taken. In this case, the calculation unit 36 inputs, as the plurality of values regarding the first parameter, 800, 1000, 1200, 1400, and 1600 to the statistical model 40. Furthermore, regarding the second parameter, in the case of an example similar to the example used in the description of the slide bar 56, the calculation unit 36 inputs, as the plurality of values regarding the second parameter, 60, 80, and 100 to the statistical model 40.

Furthermore, the calculation unit 36 sets values for other parameters that are included as explanatory variables in the statistical model 40 and are not designated as the first parameter or the second parameter. The values of the other parameters may be set by receiving a designation of fixed values from the user or may be set to predetermined values. Furthermore, when physical property values of the materials are included as the other parameters, the calculation unit 36 acquires the physical property values of the selected materials from the material DB 42 and sets them as the values of the other parameters.

Additionally, the calculation unit 36 calculates estimates for the amounts of warping of the substrate corresponding to each of the plurality of values regarding each of the first parameter and the second parameter by acquiring the output of the statistical model 40. Specifically, the calculation unit 36 calculates, for each of the plurality of values regarding the second parameter, estimates corresponding to each of the plurality of values regarding the first parameter.

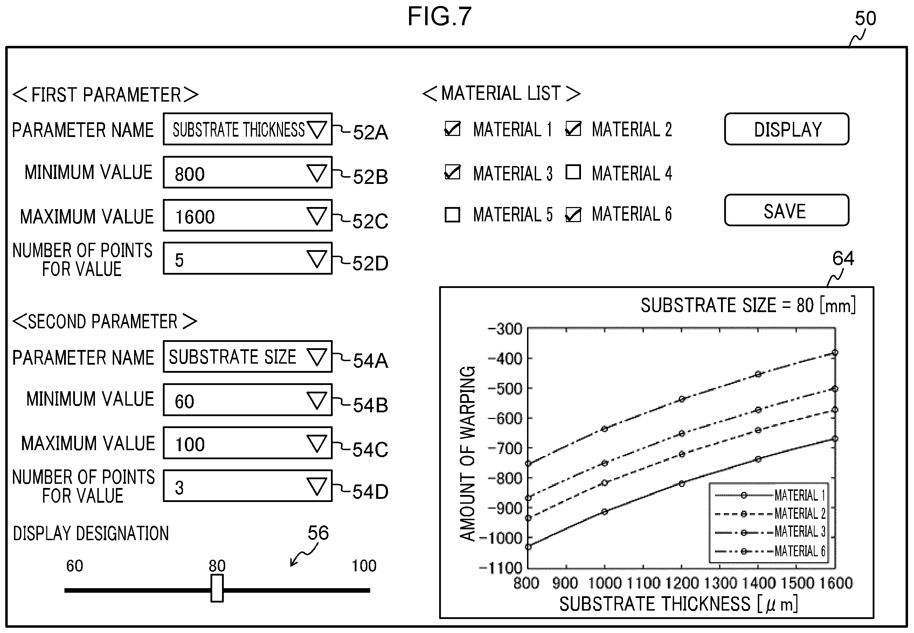

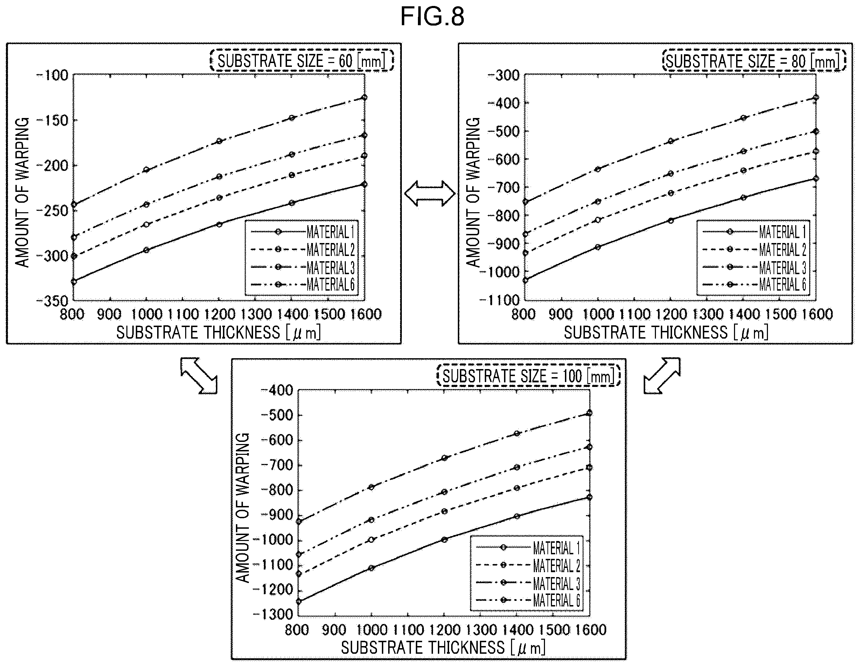

The display control unit 38 creates, for each of the plurality of values regarding the second parameter, an image in which the estimates of the amounts of warping calculated by the calculation unit 36 are correlated with each of the plurality of values regarding the first parameter. Specifically, the display control unit 38 creates, for each of the values of the second parameter, a graph in which the plurality of values of the first parameter are assigned to the X-axis and the estimates for the amounts of warping are assigned to the Y-axis. Then, the display control unit 38 displays, in the display area 64 of the reception display screen 50 as shown in FIG. 7, a graph corresponding to the value of the second parameter designated by the slide bar among the created graphs. Each time the designation of the value of the second parameter is changed by the slide bar 56, the display control unit 38 switches the graph displayed in the display area 64 as shown in FIG. 8. It will be noted that the display area 64 is not limited to being displayed in the reception display screen 50 and may be displayed in a separate window superimposed on the reception display screen 50.

Next, the action of the estimate display device 10 pertaining to the embodiment will be described.

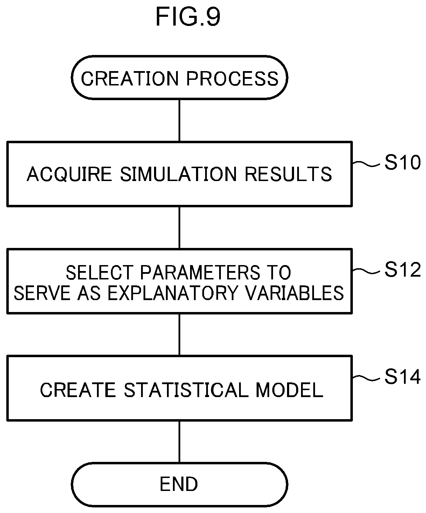

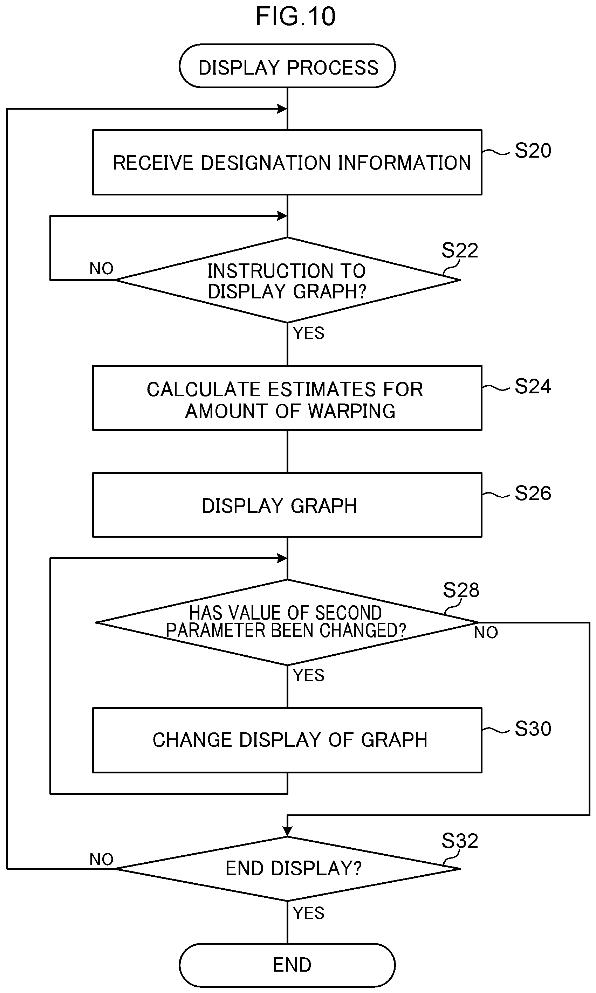

FIG. 9 is a flowchart showing the flow of a creation process executed by the CPU 12 of the estimate display device 10. Furthermore, FIG. 10 is a flowchart showing the flow of a display process executed by the CPU 12 of the estimate display device 10. The CPU 12 reads the estimate display program from the storage device 16, loads it to the memory 14, and executes it, whereby the CPU 12 functions as the different functional configurations of the estimate display device 10, and the creation process shown in FIG. 9 and the display process shown in FIG. 10 are executed. It will be noted that the creation process and the display process are an example of the estimate display method of the disclosure.

First, the creation process shown in FIG. 9 will be described.

In step S10, the creation unit 32 acquires results in which the warping of the semiconductor package substrate is simulated using simulation software. Next, in step S12, the creation unit 32 selects, from the parameters included in the acquired simulation results, parameters to serve as explanatory variables in the statistical model 40 that it will create. Next, in step S14, the creation unit 32 creates the statistical model 40 using the selected parameters included in the simulation results as explanatory variables and the amounts of warping included in the simulation results as response variables. Then, the creation unit 32 stores the statistical model 40 it has created in a predetermined storage area in the estimate display device 10, and the creation process ends.

Next, the display process shown in FIG. 10 will be described.

In step S20, the reception unit 34 displays the reception display screen 50 such as shown in FIG. 5 and receives the designation information. Next, in step S22, the calculation unit 36 determines whether an instruction to display a graph has been given by determining whether the display button 60 on the reception display screen 50 has been selected. When an instruction to display a graph has been given, the process moves to step S24, and when an instruction has not been given, the determination in this step is repeated.

In step S24, the calculation unit 36 inputs, as explanatory variables to the statistical model 40 created by the creation unit 32, the plurality of values regarding each of the first and second parameters included in the designation information received in step S20. Furthermore, the calculation unit 36 sets values for other parameters that are included as explanatory variables in the statistical model 40 and are not designated as the first parameter and the second parameter. Then, the calculation unit 36 calculates estimates for amounts of warping of the substrate corresponding to each of the plurality of values regarding each of the first parameter and the second parameter by acquiring the output of the statistical model 40.

Next, in step S26, the display control unit 38 creates, for each of the values of the second parameter, a graph in which the plurality of values of the first parameter are assigned to the X-axis and the estimates for the amounts of warping are assigned to the Y-axis. Then, the display control unit 38 displays, in the display area 64 of the reception display screen 50, the graph corresponding to the value of the second parameter designated by the slide bar 56 among the created graphs.

Next, in step S28, the display control unit 38 determines whether the designation of the value of the second parameter has been changed as a result of the slide bar 56 on the reception display screen 50 being operated. When the designation of the value of the second parameter has been changed, the process moves to step S30, and when it has not been changed, the process moves to step S32.

In step S30, the display control unit 38 switches the graph displayed in the display area 64 to the graph corresponding to the value of the second parameter designated by the slide bar 56 and then returns to step S28. On the other hand, in step S32, the display control unit 38 determines whether to end the display of the reception display screen 50 by determining whether a command to end the display has been received. When the display is not to be ended, the process returns to step S20, and when the display is to be ended, the display process ends.

As described above, the estimate display device pertaining to this embodiment receives, in regard to one or more materials selected from a plurality of materials preregistered as candidates for materials to be used in the semiconductor package, a range of values for one or more parameters affecting the warping of the semiconductor package substrate. Furthermore, the estimate display device retains the statistical model created based on results of simulating amounts of warping of the substrate when values of each of a plurality of parameters affecting the warping of the substrate have been changed and using some of the plurality of parameters as explanatory variables and using the amounts of warping as response variables. Additionally, the estimate display device inputs the plurality of values included in the received range as explanatory variables, calculates estimates for the amount of warping corresponding to each of the plurality of values, and performs control to display on the display device a graph in which the estimates are correlated with each of the plurality of values. Because of this, trends in the amount of warping with respect to changes in the values of the parameters can be displayed in a timely manner by shortening calculation time. The user can check the graphs showing trends in the amount of warping with respect to the parameters by simply inputting minimum designation information including the range of values for the target parameter for which the user wants to check trends in the amount of warping.

### <Example Modification 1>

In the above embodiment, a case was described where the estimate display device displays graphs showing trends in the warping of the semiconductor package substrate as the phenomenon that will occur in the product, but the estimate display device is not limited to this. In a first example modification, the estimate display device may be configured to display graphs showing trends in, for example, the lifespan of solder in the semiconductor package substrate or the stress of the semiconductor package substrate. In this case, the estimate display device creates in advance, based on simulation results regarding the lifespan of the solder or the stress, a statistical model using some of the plurality of parameters affecting the lifespan of the solder or the stress as explanatory variables. On the reception display screen, the estimate display device receives the designation information including a range of parameters affecting the lifespan of the solder or the stress and inputs it to the statistical model. Then, the estimate display device calculates estimates for the lifespan of the solder or the stress with respect to each of the plurality of values in the range and displays graphs showing these trends.

### <Example Modification 2>

In the above embodiment, a case was described where the first parameter and the second parameter are designated, but it is not essential for the second parameter to be designated. Furthermore, two or more parameters may be designated as the second parameter. In this case, when the estimate display device creates a graph for each of the plurality of values in the range designated in regard to any of the second parameters, it fixes the values of the other second parameters.

### <Example Modification 3>

In a third example modification, depending on the range of values of a designated parameter, a plurality of values for another parameter are set. For example, the sizes of chips placed on the substrate are sizes that differ depending on the size of the substrate. For that reason, when the size of the substrate is designated as the first parameter, in a range equal to or less than a predetermined value among the designated range of values a first value is set as the chip size, and in a range exceeding the predetermined value a second value greater than the first value is set. In this case, in a graph in which the value of the first parameter is assigned to the X-axis, the estimate display device clearly indicates the range equal to or less than the predetermined value and the range exceeding the predetermined value and displays information relating to the other parameter for which different values have been set in each range.

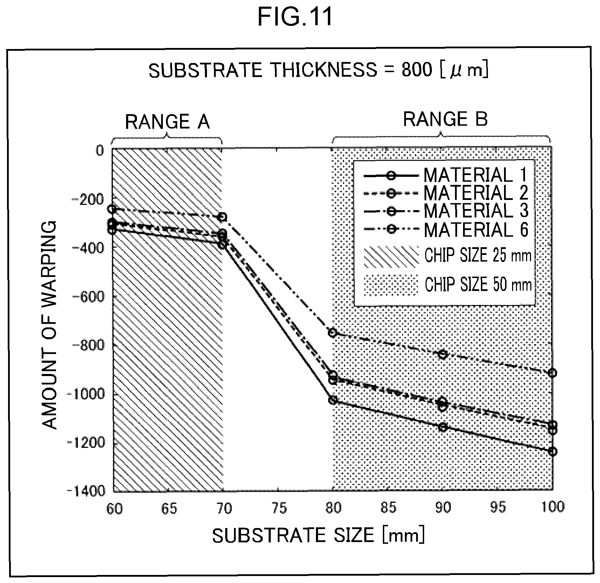

FIG. 11 shows a display example of the graph in example modification 3. In the example of FIG. 11, the X-axis represents the size of the substrate designated as the first parameter, and a range of 60 to 100 mm is designated. Within this, the chip size is set to 25 mm in the range of 60 to 70 mm (range A in FIG. 11), and the chip size is set to 50 mm in the range of 80 to 100 mm (range B in FIG. 11).

### <Example Modification 4>

In the above embodiment, a case was described where the estimate display device creates the statistical model based on results of simulating amounts of warping using simulation software, but the estimate display device is not limited to this. As a fourth example modification, the estimate display device may create the statistical model based on amounts of warping acquired by an experiment in regard to different patterns in which the values of each of the plurality of parameters affecting the phenomenon occurring in the product are changed.

### <Example Modification 5>

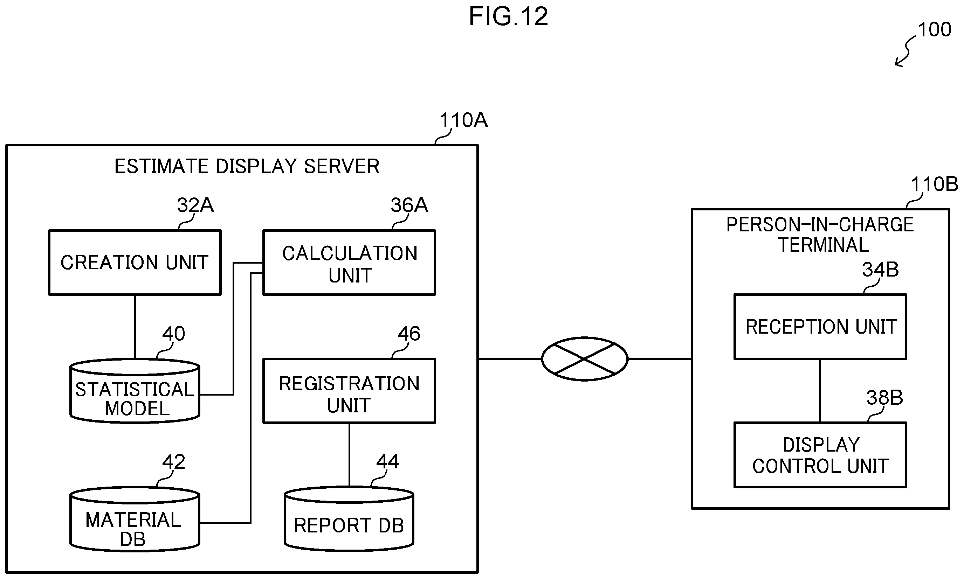

In the above embodiment, a configuration that functions as a stand-alone estimate display device was described, but in a fifth example modification, as shown in FIG. 12, an estimate display system 100 including an estimate display server 110A and a person-in-charge terminal 110B will be described. The estimate display server 110A and the person-in-charge terminal 110B are interconnected via a network. It will be noted that the numbers of the estimate display servers 110A and the person-in-charge terminals 110B included in the estimate display system 100 are not limited to those in the example of FIG. 12. Furthermore, in the fifth example modification, parts shared with the above embodiment are denoted using reference signs having shared numerical portions, mainly parts different from the above embodiment will be described, and detailed description in regard to shared functions will be omitted.

The estimate display server 110A functionally includes a creation unit 32A, a calculation unit 36A, and a registration unit 46. Furthermore, in a predetermined storage area in the estimate display server 110A are stored the statistical model 40, the material DB 42, and a report DB 44.

The calculation unit 36A receives from the person-in-charge terminal 110B the designation information input via the reception display screen 50. The calculation unit 36A calculates estimates regarding the phenomenon occurring in the product with respect to each of the plurality of values in the range of the designated parameter and sends the estimates to the person-in-charge terminal 110B. The registration unit 46 receives a report (details are described below) from the person-in-charge terminal 110B and registers the received report in the report DB 44.

The person-in-charge terminal 110B is an information processing terminal such as a personal computer, tablet terminal, or smartphone retained by a person in charge. The person-in-charge terminal 110B functionally includes a reception unit 34B and a display control unit 38B.

The reception unit 34B sends to the estimate display server 110A the designation information input via the reception display screen 50. Furthermore, the reception unit 34B receives a customer ID that is customer identification information and creates a report linked to the customer ID when ending the display of the reception display screen 50. The reception unit 34B includes the designation information and the estimates in the report. Furthermore, when any material is selected from the plurality of materials, the reception unit 34B may be configured to receive information about the selected material and include it in the report. Furthermore, the reception unit 34B may be configured to receive various types of information such as customer requests and include it in the report. The reception unit 34B sends the report it has created to the estimate display server 110A.

According to example modification 5, multiple persons in charge can utilize, via their own person-in-charge terminals 110B, services provided by the estimate display system 100, and processing in each person-in-charge terminal 110B can be alleviated. Furthermore, reports stored in the report DB 44 of the estimate display server 110A can be shared and effectively utilized by each person in charge.

Furthermore, the processes that the CPU executed by reading software (a program) in the above embodiment may also be executed by various types of processors other than a CPU. Examples of processors in this case include programmable logic devices (PLDs) whose circuit configuration can be changed after manufacture, such as field-programmable gate arrays (FPGAs), and dedicated electrical circuits that are processors having a circuit configuration dedicatedly designed for executing specific processes, such as application-specific integrated circuits (ASICs). Furthermore, the estimate display process may be executed by one of these various types of processors or may be executed by a combination of two or more processors of the same type or different types (e.g., plural FPGAs, and a combination of a CPU and an FPGA, etc.). Furthermore, the hardware structures of these various types of processors are more specifically electrical circuits in which circuit elements such as semiconductor devices are combined.

Furthermore, in the above embodiment, an aspect was described where the estimate display program is stored (installed) beforehand in the storage device, but the program is not limited to this. The program may also be provided in a form in which it is stored in a storage medium such as a CD-ROM, a DVD-ROM, or a USB memory. Furthermore, the program may also take a form in which it is downloaded via a network from an external device.

### Reference Signs List

- 10: Estimate Display Device

- 12: CPU
- 14: Memory
- 16: Storage Device
- 18: Input Device
- 20: Output Device
- 22: Storage Medium Reading Device
- 24: Communication I/F
- 26: Bus
- 32, 32A: Creation Unit
- 34, 34B: Reception Unit
- 36, 36A: Calculation Unit
- 38, 38B: Display Control Unit
- 40: Statistical Model
- 42: Material DB
- 44: Report DB
- 46: Registration Unit
- 50: Reception Display Screen
- 52: First Designation Area
- 52A, 52B, 52C, 52D: Input Fields
- 54: Second Designation Area
- 54A, 54B, 54C, 54D: Input Fields
- 56: Slide Bar
- 58: Material Selection Area
- 60: Display Button
- 62: Save Button
- 64: Display Area
- 100: Estimate Display System
- 110A: Estimate Display Server
- 110B: Person-in-charge Terminal

## Claims

1. An estimate display device, comprising:
a reception unit that receives, in regard to one or more materials selected from a plurality of materials preregistered as candidates for materials to be used in a product, a range of values for one or more parameters affecting a phenomenon occurring in the product;
a calculation unit that inputs, as explanatory variables, a plurality of values included in the range received by the reception unit to a statistical model created based on results obtained by a simulation or an experiment on a value representing the phenomenon occurring in the product in a case in which values of each of a plurality of parameters affecting the phenomenon occurring in the product have been changed, the statistical model using a portion of the plurality of parameters as explanatory variables and using the results as response variables, and that calculates estimates for the value representing the phenomenon occurring in the product which correspond to each of the plurality of values; and
a display control unit that performs control to display, at a display device, an image in which the estimates calculated by the calculation unit are correlated with each of the plurality of values.

2. The estimate display device of claim 1, wherein the one or more parameters are parameters selected from the plurality of parameters as explanatory variables in the statistical model.

3. The estimate display device of claim 1 or claim 2, wherein the reception unit displays a reception screen including designation areas for receiving the range of values in regard to each of the one or more parameters, and receives the range of values.

4. The estimate display device of claim 3, wherein the reception unit displays the reception screen, which further includes a selection area for selecting the one or more materials from the preregistered plurality of materials.

5. The estimate display device of claim 1 or claim 2, wherein:
the reception unit receives a range of values regarding each of a first parameter and a second parameter,
the calculation unit calculates, for each of the plurality of values regarding the second parameter, the estimates corresponding to each of the plurality of values regarding the first parameter, and
the display control unit creates and displays, for each of the plurality of values regarding the second parameter, an image in which the estimates are correlated with each of the plurality of values regarding the first parameter.

6. The estimate display device of claim 5, wherein:
the reception unit displays a reception screen including a display component for designating any of the plurality of values regarding the second parameter and receives the value of the second parameter that has been designated as a result of the display component being operated, and
the display control unit switches between and displays, in accordance with the value of the second parameter received by the reception unit, a plurality of images created for each of the plurality of values regarding the second parameter.

7. The estimate display device of claim 1 or claim 2, wherein the estimate display device includes a creation unit that creates, based on results obtained by a simulation or an experiment on the value representing the phenomenon occurring in the product, the statistical model using a portion of the plurality of parameters as explanatory variables and using the results as response variables.

8. The estimate display device of claim 1 or claim 2, wherein, in a case in which the product is a semiconductor package, the phenomenon is warping of the product, stress of the product, or the lifespan of solder in the product.

9. An estimate display method, comprising:
a reception unit receiving, in regard to one or more materials selected from a plurality of materials preregistered as candidates for materials to be used in a product, a range of values for one or more parameters affecting a phenomenon occurring in the product;
a calculation unit inputting, as explanatory variables, a plurality of values included in the range received by the reception unit to a statistical model created based on results obtained by a simulation or an experiment on a value representing the phenomenon occurring in the product in a case in which values of each of a plurality of parameters affecting the phenomenon occurring in the product have been changed, the statistical model using a portion of the plurality of parameters as explanatory variables and using the results as response variables, and calculating estimates for the value representing the phenomenon occurring in the product which correspond to each of the plurality of values; and
a display control unit performing control to display, at a display device, an image in which the estimates calculated by the calculation unit are correlated with each of the plurality of values.

10. An estimate display program executable by a computer to function as:
a reception unit that receives, in regard to one or more materials selected from a plurality of materials preregistered as candidates for materials to be used in a product, a range of values for one or more parameters affecting a phenomenon occurring in the product;
a calculation unit that inputs, as explanatory variables, a plurality of values included in the range received by the reception unit to a statistical model created based on results obtained by a simulation or an experiment on a value representing the phenomenon occurring in the product in a case in which values of each of a plurality of parameters affecting the phenomenon occurring in the product have been changed, the statistical model using a portion of the plurality of parameters as explanatory variables and using the results as response variables, and that calculates estimates for the value representing the phenomenon occurring in the product which correspond to each of the plurality of values; and
a display control unit that performs control to display, at a display device, an image in which the estimates calculated by the calculation unit are correlated with each of the plurality of values.
